# EUROPÄISCHE PATENTSCHRIFT

(11) **EP 1 762 861 B1**
(45) Veröffentlichungstag und Bekanntmachung des Hinweises auf die Patenterteilung: **12.12.2012**
(21) Anmeldenummer: 06120070.5
(22) Anmeldetag: 04.09.2006
(51) Int. Cl.: G01S 15/93

(54) **Verfahren und Vorrichtung zur Ermittlung der Geometrie und Position einer Parklücke**
Method and device for determining the geometry and position of a parking place
Procédé et dispositif de mesure de créneaux de stationnement d'un vehicule automobile

(30) Priorität: 09.09.2005 DE 102005042853
(43) Veröffentlichungstag der Anmeldung: 14.03.2007
(73) Patentinhaber: Hella KGaA Hueck & Co., 59552 Lippstadt (DE)
(72) Erfinder: Höver, Norbert, 59555 Lippstadt (DE); Ottenhues, Thomas, 48477 Hörstel (DE)

(56) Entgegenhaltungen:
- WO-A-97/47991
- WO-A1-03/087874
- DE-A1- 3 813 083
- DE-A1- 10 339 645
- DE-B3- 10 349 755
- US-A- 4 931 930

## Beschreibung

### STAND DER TECHNIK

Die vorliegende Erfindung betrifft ein Verfahren zur Ermittlung der Geometrie und Position einer Parklücke nach dem Oberbegriff des Anspruchs 1. Darüber hinaus betrifft die vorliegende Erfindung eine Vorrichtung zur Durchführung des Verfahrens.

Die internationale Patentanmeldung WO 97/47991 A1 offenbart eine Vorrichtung zur Ausmessung von Parklücken mit einem Näherungssensor, der ein Messbündel auf eine Reihe geparkter Fahrzeuge aussendet, um das Vorhandensein oder das Nichtvorhandensein eines Fahrzeugs neben dem mit der Vorrichtung ausgestatteten Fahrzeug festzustellen, und mit einem Kilometerzähler, der mit dem Näherungssensor gekoppelt ist, um die Länge eines freien Platzes zu bestimmen, der zwei bereits geparkte Fahrzeuge trennt. Der Näherungssensor ist so gestaltet, dass er mindestens ein Messbündel aussendet, das auf den Boden im Bereich der geparkten Fahrzeuge gerichtet ist, so dass das Messbündel in dem Fall, dass ein Fahrzeug geparkt ist, auf das Fahrzeug oder bei Nichtvorhandensein eines geparkten Fahrzeugs auf den Boden trifft. Das vom Näherungssensor ausgesendete Messbündel kann mehrere dünne, fixe Bündel umfassen, die annähernd in der gleichen vertikalen Ebene angeordnet sind. In einer alternativen Ausführungsform kann das Messbündel ein einziges dünnes Bündel sein, das eine annähernd vertikale Abtastbewegung ausführt. In einer weiteren alternativen Ausführungsform kann das Messbündel ein einziges breites Bündel sein, das in Richtung auf die Reihe der geparkten Fahrzeuge abgestrahlt wird. Das Prinzip der in der vorstehend genannten Druckschrift offenbarten Lösung besteht darin, mit einem oder mehreren Messbündeln den Boden anstatt die Flanken der Fahrzeuge anzupeilen, um das Vorhandensein eines freien Parkplatzes festzustellen. Eine konzeptionell ähnliche Variante offenbart die WO 03/087874 A1.

Aus der deutschen Offenlegungsschrift DE 196 16 447 A1 ist ein Verfahren zur Ermittlung der Länge einer Parklücke bekannt. Dieses Verfahren ist allerdings nicht dazu geeignet, auch die Tiefe der Parklücke zu bestimmen.

Die deutsche Offenlegungsschrift DE 103 39 645 A1 offenbart ein Verfahren sowie eine Vorrichtung zur Bestimmung der Größe und Position einer Parklücke. Die Parklücke wird mit Hilfe von zwei Ultraschallsensoreinrichtungen je Fahrzeuglängsseite vermessen, wobei eine erste Ultraschallsensoreinrichtung für die Bestimmung der Länge und eine zweite Ultraschallsensoreinrichtung für die Bestimmung der Tiefe der Parklücke eingesetzt wird.

Die DE 38 13 083 A1 offenbart eine Einparkhilfseinrichtung mit einer Mehrzahl von Ultraschall-Abstandsmesseinheiten, die an geeigneten Teilen des Fahrzeugs montiert sind und in gewisse Richtungen weisen, um die Abstände zwischen der Karosserie und den Hindernissen in diesen Richtungen zu messen. An jeder der vier Ecken des Fahrzeugs sind jeweils zwei Ultraschall-Abstandsmesseinheiten vorgesehen, die in Längs- und in Querrichtung des Fahrzeugs ausgerichtet sind, so dass in Längsrichtung des Fahrzeugs an jeder Seite jeweils insgesamt zwei Ultraschall-Abstandsmesseinheiten angeordnet sind, die ein Ultraschallsignal zur Seite abstrahlen können. Auf Grund der Vielzahl von Ultraschall-Abstandsmesseinheiten ist der Aufbau dieser Einparkhilfseinrichtung vergleichsweise kompliziert und teuer. Darüber hinaus ist die Signalauswertung auf Grund der Mehrzahl von Ultraschall-Abstandsmesseinheiten relativ aufwändig. Eine identisch arbeitende Einparkhilfseinrichtung ist darüber hinaus aus der US 4,931,930 bekannt.

Ein Nachteil der aus dem Stand der Technik bekannten Verfahren und Vorrichtungen besteht darin, dass mindestens zwei Ultraschallsensoreinrichtungen je Fahrzeuglängsseite zur Erfassung der Länge und der Tiefe der Parklücke benötigt werden, so dass der Montageaufwand und damit die Kosten für die Herstellung der Vorrichtung erhöht werden. Bei einer Vermessung einer Parklücke müssen darüber hinaus stets die Signale von mindestens zwei Ultraschallsensoreinrichtungen ausgewertet werden, so dass die aus dem Stand der Technik bekannten Verfahren eine relativ aufwändige Auswertung der Messdaten erfordern. Hier setzt die vorliegende Erfindung an. DE 10349755 offenbart einer Parklückensensor mit einem ultraschall sensor.

Der vorliegenden Erfindung liegt die Aufgabe zugrunde, ein Verfahren zur Bestimmung der Geometrie und der Position einer Parklücke in Bezug auf die Position eines Fahrzeugs, das an der Parklücke vorbeifährt, anzugeben, das mit einem geringen Aufwand durchgeführt werden kann. Darüber hinaus liegt der vorliegenden Erfindung die Aufgabe zugrunde, eine Vorrichtung zur Durchführung des Verfahrens vorzuschlagen, die kostengünstig hergestellt werden kann und die relativ einfach in das Fahrzeug integriert werden kann.

### VORTEILE DER ERFINDUNG

Hinsichtlich des Verfahrens wird die der vorliegenden Erfindung zugrunde liegende Aufgabe durch ein Verfahren mit den Merkmalen des Anspruchs 1 gelöst.

Gemäß Anspruch 1 wird vorgeschlagen, dass eine an einer Längsseite des Fahrzeugs angeordnete Ultraschall sensoreinrichtung wiederholt Ultraschallimpulse in Richtung auf die Parklücke aussendet, die in einem Abstand d vom Fahrzeug einen im Wesentlichen rechteckig geformten sensitiven Detektionsbereich und dass in Abhängigkeit von den von Objekten oder Hindernissen zurückreflektierten Ultraschallimpulsen die Länge und die Tiefe der Parklücke bestimmt werden. Dadurch kann bei einer im Wesentlichen konstanten Höhe durch eine geringe Länge des Detektionsbereichs eine relativ hohe Ortsauflösung bei der Vermessung der Parklücke erhalten werden. Die zur Durchführung des Verfahrens eingesetzte Ultraschall sensoreinrichtung weist insbesondere eine so genannte astigmatische Abstrahlcharakteristik auf. Es besteht die Möglichkeit, dass auch die Beschaffenheit der Parklücke mit Hilfe des hier vorgestellten Verfahrens bestimmt werden kann. Dadurch, dass im Gegensatz zu den aus dem Stand der Technik bekannten Verfahren bei der vorliegenden Erfindung die Geometrie und die Position einer Parklücke in Bezug auf die Position des Fahrzeugs mit Hilfe einer einzigen Ultraschallsensoreinrichtung pro Fahrzeuglängsseite bestimmt werden kann, kann das hier vorgestellte Verfahren einfacher und mit geringerem Aufwand durchgeführt werden als die aus dem Stand der Technik bekannten Verfahren, bei denen stets mindestens zwei Ultraschallsensoreinrichtungen je Fahrzeuglängsseite benötigt werden, um die Länge und die Tiefe der Parklücke zu vermessen. Somit werden Ultraschallimpulse erzeugt, die in zueinander senkrechten Raumrichtungen eine unterschiedliche Divergenz aufweisen. Dadurch kann die räumliche Auflösung, mit der die Parklücke bei der Durchführung des Verfahrens vermessen wird, gezielt eingestellt werden.

In einer bevorzugten Ausführungsform wird vorgeschlagen, dass die Ultraschall sensoreinrichtung Ultraschallimpulse mit einer Hauptausbreitungsrichtung, die im Wesentlichen senkrecht zur Längsrichtung des Fahrzeugs orientiert ist, aussendet.

Durch eine Betätigung einer Fahrtrichtungsanzeigeeinrichtung des Fahrzeugs kann zwischen einer ersten Ultraschallsensoreinrichtung, die an einer ersten Längsseite des Fahrzeugs angeordnet ist und einer zweiten Ultraschallsensoreinrichtung, die an einer zweiten Längsseite des Fahrzeugs angeordnet ist, umgeschaltet werden.

Dies ist insbesondere dann vorteilhaft, wenn eine Mehrdeutigkeit bezüglich der vorhandenen Parklücken vorhanden ist (zum Beispiel eine erste Parklücke links und eine zweite Parklücke rechts vom Fahrzeug). Somit kann die entsprechende Ultraschallsensoreinrichtung beispielsweise durch Betätigung eines Blinkers Stet des Fahrzeugs gezielt ausgewählt und aktiviert werden, um die entsprechende Parklücke zu vermessen. Es besteht zum Beispiel auch die (nicht vom Anspruch) gedeckte Möglichkeit, dass das Fahrzeug an zwei Parklücken, die in Fahrtrichtung links und rechts vom Fahrzeug lokalisiert sind, vorbeifährt und dass während der Vorbeifahrt beide Parklücken vermessen werden und dass erst anschließend ausgewählt wird in welche der beiden Parklücken das Fahrzeug eingeparkt werden soll. Losgelöst von dem hier beschriebenen Verfahren besteht auch bei den aus dem Stand der Technik bekannten Verfahren beziehungsweise Vorrichtungen zur Ermittlung der Geometrie und Position einer Parklücke die Möglichkeit, dass eine oder mehrere Ultraschallsensoreinrichtungen durch Betätigung einer Fahrtrichtungsanzeigeeinrichtung aktiviert werden. Dies kann beispielsweise auch unter weiterer Berücksichtigung von Fahrzeugdaten, wie zum Beispiel des Lenkwinkeleinschlags oder der Fahrzeuggeschwindigkeit erfolgen.

Eine Vorrichtung zur Durchführung eines Verfahrens nach Ansprüch 1 wäre mit der Folgenden Merkmalen ausgestattet.
- eine erste Ultraschallsensoreinrichtung, die an einer ersten Längseite des Fahrzeugs angebracht ist,
- eine zweite Ultraschallsensoreinchtung, die an einer zweiten Längsseite des Fahrzeugs angebracht ist,
wobei jede der Ultraschallsensoreinrichungen eine Membran aufweist, die so ausgebildet ist, dass sie während des Betriebs der Vorrichtung wiederholt Ultraschallimpulseerzeugen kann, die in einem Abstand d vom Fahrzeug einen im Wesentlichen rechteckig ausgebildeten Detektionsbereich mit einer Länge L1 und einer Höhe H aufweisen, wobei die Höhe H größer, vorzugsweise wesentlich größer, ist als die Länge L1. Dadurch, dass nur eine einzige Ultraschallsensoreinrichtung an den Längsseiten des Fahrzeugs vorhanden ist, kann insbesondere der Aufwand für die Montage der erfindungsgemäßen Vorrichtung verringert werden. Die Membran ist in einem Sendebetriebsmodus für das Aussenden der Ultraschallimpulse vorgesehen und in einem Empfangsbetriebsmodus für den Empfang der Ultraschallimpulse, die von Objekten oder Hindernissen in Richtung auf das Fahrzeug zurückreflektiert werden.

In einem weist jede der Ultraschallsensoreinrichtungen mindestens eine Recheneinheit auf, die vorzugsweise in die jeweilige Ultraschallsensoreinrichtung integriert ist. Dadurch kann erreicht werden, dass die Ultraschallsensoreinrichtungen zum Beispiel aktiv von außen konfiguriert werden können. Durch diese Maßnahme können die Ultraschallsensoreinrichtungen ferner für eine signaladaptive Zieldetektion und für eine Mehrzielfähigkeit ausgelegt sein. Ferner ermöglicht die in die Ultraschall sensoreinrichtung integrierte Recheneinheit auch eine Eigendiagnose der Ultraschallsensoreinrichtungen.

ist vorgesehen, dass die Recheneinheit für den Empfang von Ultraschallimpulsen, die von einem oder mehreren Objekten zurückreflektiert werden, geeignet ist.

Vorzugsweise weist die Vorrichtung mindestens eine Hauptrecheneinheit auf, an der die Ultraschallsensoreinrichtungen angeschlossen sind. Die Hauptrecheneinheit kann zum Beispiel für eine Umschaltung der Ultraschallsensoreinrichtungen in verschiedene Messmodi in Bezug auf Überlagerungsmessungen, bei denen einzelne Messungen aufaddiert werden können, sowie in Bezug auf die Messzeiten eingerichtet sein. Auf diese Weise kann ein optimiertes Ergebnis bei der Vermessung der Parklücke erhalten werden. Durch diese Maßnahme können die Ultraschallsensoreinrichtungen auch für andere Anwendungen wie zum Beispiel für eine Abstandsmessung und eine Abstandswarnung während des Einparkens eingesetzt werden.

### ZEICHNUNGEN

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen
- Fig. 1: eine schematische Darstellung eines Fahrzeugs mit einer erfindungsgemäßen Vorrichtung zur Ermittlung der Geometrie und Position einer Parklücke während der Durchführung des Verfahrens;
- Fig. 2: eine Vorderansicht des Fahrzeugs gemäß Fig. 1;
- Fig. 3: eine schematisch stark vereinfachte Darstellung eines Aufbaus der erfindungsgemäßen Vorrichtung zur Ermittlung der Geometrie und Position einer Parklücke.

### BESCHREIBUNG DES AUSFÜHRUNGSBEISPIELS

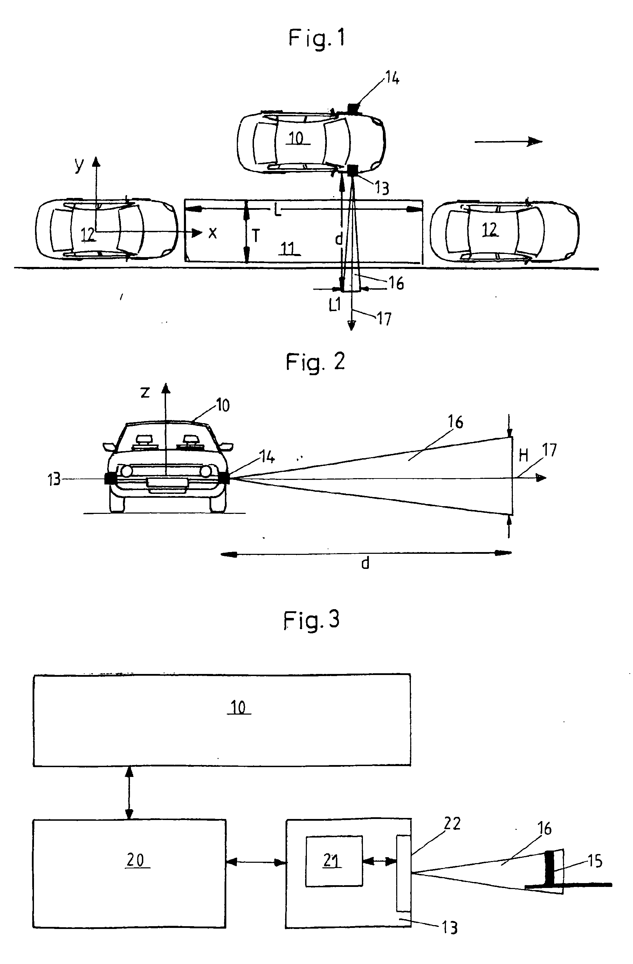

Unter Bezugnahme auf Fig. 1 und Fig. 2 soll nachfolgend ein Verfahren zur Ermittlung der Geometrie und Position einer Parklücke gemäß einer bevorzugten Ausführungsform der vorliegenden Erfindung näher erläutert werden. Zur Vereinfachung der Darstellung sind in Fig. 1 und Fig. 2 kartesische Koordinatensysteme eingezeichnet.

In Fig. 1 ist ein Fahrzeug 10 während der Vorbeifahrt an einer Parklücke 11 schematisch vereinfacht dargestellt. Die Fahrtrichtung des Fahrzeugs 10 in x-Richtung ist dabei durch einen Pfeil angedeutet. Die Parklücke 11, die eine Länge L in x-Richtung und eine Tiefe T in y-Richtung besitzt, wird hierbei von zwei Fahrzeugen 12 begrenzt. Damit das Fahrzeug 10 ordnungsgemäß in die Parklücke 11 eingeparkt werden kann, muss die Parklücke 11 für das Fahrzeug 10 eine ausreichende Länge L sowie eine ausreichende Tiefe T besitzen. Ferner darf sich kein Hindernis innerhalb der Parklücke 11 befinden.

Mit Hilfe des erfindungsgemäßen Verfahrens kann während der Vorbeifahrt des Fahrzeugs 10 an der Parklücke 11 die Position und die Geometrie der Parklücke 11 mit hoher Genauigkeit bestimmt werden. Das bedeutet, dass während der Durchführung des Verfahrens die Länge L, die Tiefe T, die Beschaffenheit, die relative Position der Parklücke 11 in x-Richtung und in y-Richtung sowie die Ausrichtung der Parklücke 11 relativ zum vorbeifahrenden Fahrzeug 10 bestimmt werden. Ferner kann mit Hilfe des Verfahrens erfasst werden, ob sich innerhalb der Parklücke 11 ein oder mehrere Objekte befinden. Eine gute Lokalisierung von Objekten relativ zur Position des Fahrzeugs 10 ist dabei besonders wichtig, um eine genaue Vermessung der Parklücke 11 zu ermöglichen.

Zur Durchführung des Verfahrens weist das Fahrzeug 10 eine entsprechende Vorrichtung zur Bestimmung der Geometrie und Position einer Parklücke auf. Diese Vorrichtung, die später unter weiterer Bezugnahme auf Fig. 3 näher beschrieben werden wird, umfasst in diesem Ausführungsbeispiel eine erste und eine zweite Ultraschallsensoreinrichtung 13, 14. Die beiden Ultraschallsensoreinrichtungen 13, 14 sind für das Senden und Empfangen von Ultraschallimpulsen geeignet.

Man erkennt, dass in Fahrtrichtung links und rechts an jeder der beiden Längsseiten des Fahrzeugs 10 jeweils eine der beiden Ultraschallsensoreinrichtungen 13, 14 der Vorrichtung angebracht ist. Mit Hilfe der ersten Ultraschallsensoreinrichtung 13, die in Fahrtrichtung des Fahrzeugs 10 an der rechten Fahrzeuglängsseite angeordnet ist, kann die in Fig. 1 gezeigte Parklücke 11 vermessen werden. Mittels der zweiten Ultraschallsensoreinrichtung 14, die in Fahrtrichtung des Fahrzeugs 10 an der linken Fahrzeuglängsseite angeordnet ist, können in Fig. 1 nicht explizit gezeigte Parklücken vermessen werden, die sich in Fahrtrichtung links vom Fahrzeug 10 befinden. Ferner können mittels der zweiten Ultraschallsensoreinrichtung 14 Hindernisse, die sich in Fahrtrichtung links vom Fahrzeug 10 befinden, erfasst werden. Vorzugsweise sind die Ultraschallsensoreinrichtungen 13, 14 jeweils in einem seitlichen Blinker an einem der beiden vorderen Kotflügeln des Fahrzeugs 10 angeordnet. Es besteht beispielsweise auch die Möglichkeit, dass die beiden Ultraschallsensoreinrichtungen 13, 14 an einer Zierleiste oder in einem Stoßfänger des Kraftfahrzeugs 10 angeordnet sind.

Es wird bei der vorliegenden Erfindung zur Durchführung des erfindungsgemäßen Verfahrens jeweils nur eine einzelne Ultraschallsensoreinrichtung 13, 14 pro Fahrzeuglängsseite benötigt.

Damit die Position und Geometrie von Parklücken mit einer einzigen Ultraschallsensoreinrichtung 13, 14 pro Fahrzeuglängsseite mit der erforderlichen Genauigkeit bestimmt werden kann, weisen die Ultraschallsensoreinrichtungen 13, 14 im Gegensatz zu den aus dem Stand der Technik bekannten Vorrichtungen eine so genannte astigmatische Abstrahlcharakteristik auf. Das bedeutet, dass die beiden Ultraschallsensoreinrichtungen 13, 14 ausgehend von der entsprechenden Ultraschall sensoreinrichtung 13 14 Ultraschallimpulse in einem Abstrahlungsbereich 16 aussenden, der so ausgebildet ist, dass in einer Ebene senkrecht zur Hauptausbreitungsrichtung 17, welche im Wesentlichen senkrecht zur Längsachse des Fahrzeugs 10 orientiert ist, in einem Abstand d von der entsprechenden Ultraschall sensoreinrichtung 13, 14 ein im Wesentlichen rechteckig geformter sensitiver Detektionsbereich mit einer Länge L1 und einer Höhe H erhalten wird. Dabei ist im Abstand d die Höhe H des sensitiven Detektionsbereichs größer als die Länge L1. Beispielsweise kann das Verhältnis der Höhe H des sensitiven Detektionsbereichs zu dessen Länge L1 in einer Größenordnung von etwa 3:1 liegen.

Die Ultraschallsensoreinrichtungen 13, 14 sind so ausgebildet, dass die Länge L der Parklücke 11 in x-Richtung bei im Wesentlichen konstanter Höhe H durch wiederholtes Senden und Empfangen von Ultraschallimpulsen mit einer hohen Ortsauflösung L1 vermessen werden kann, so dass der Anfang beziehungsweise das Ende der Parklücke 11 sowie Hindernisse und Objekte innerhalb der Parklücke 11 zuverlässig erfasst werden können. Die von den Ultraschallsensoreinrichtungen 13, 14 ausgesandten Ultraschallimpulse besitzen also mit anderen Worten in x-Richtung eine geringere Divergenz als in z-Richtung.

Die in Fig. 1 gezeigte Parklücke 11 wird während der Vorbeifahrt des Fahrzeugs 10 mit Hilfe der ersten Ultraschallsensoreinrichtung 13 durch einzelne, relativ schnell aufeinander folgende Einzelmessungen abgetastet. Bei jeder Einzelmessung wird ein Ultraschallimpuls in Richtung auf die Parklücke 11 ausgesandt. Trifft der Ultraschallimpuls auf ein Hindernis, wird er zumindest teilweise in Richtung auf das Fahrzeug 10 zurückreflektiert. Der zurückreflektierte Teil des Ultraschallimpulses wird von der ersten Ultraschallsensoreinrichtung 13 erfasst. Durch wiederholte Einzelmessungen mit hoher Ortsauflösung in x-Richtung kann bestimmt werden, ob die Länge L der Parklücke 11 in x-Richtung und die Tiefe T der Parklücke 11 in y-Richtung ausreichen und ob die Beschaffenheit der Parklücke derart ist, dass das Fahrzeug 10 problemlos in die vermessene Parklücke 11 eingeparkt werden kann. Die relativ geringe Divergenz der Ultraschallimpulse in x-Richtung stellt eine hohe Ortsauflösung und damit eine gute Lokalisierung eines erkannten Hindernisses, das sich innerhalb der Parklücke 11 befindet, zur Verfügung. Durch die relativ große Aufweitung der Ultraschallimpulse in der Höhe (in z-Richtung) können auch Objekte, die beispielsweise von oben oder von unten in das Sichtfeld der Ultraschallsensoreinrichtung 13, 14 hineinragen, zuverlässig detektiert werden. Durch häufiges Abtasten der Parklücke 11 können auch Hindernisse erfasst werden, die von der Seite in die Parklücke 11 hineinragen. Während der Vorbeifahrt des Fahrzeugs 10 kann ferner die Position der Parklücke 11 sowie ihre Ausrichtung relativ zum Fahrzeug 10 vermessen werden.

Die während der Vermessung der Parklücke 11 gesammelten Informationen über die Geometrie und die Position der Parklücke 11 können dem Fahrer des Fahrzeugs 10 beispielsweise visuell auf einer Anzeigevorrichtung im Inneren des Fahrzeugs 10 angezeigt werden. Dadurch kann ein geführtes Einparken des Fahrzeugs 10 ermöglicht werden. Es besteht auch die Möglichkeit, dass das Einparken des Fahrzeugs 10 mit Hilfe einer hier nicht näher erläuterten Einparkhilfseinrichtung semiautonom vorgenommen wird, so dass eine Führung des Fahrzeugs 10 in Querrichtung übernommen werden kann und gegebenenfalls eine Führung des Fahrzeugs 10 in Längsrichtung mit einer Geschwindigkeitsbegrenzung vorgesehen sein kann. Es besteht ferner die Möglichkeit, dass das Fahrzeug 10 auf Grund der von der erfindungsgemäßen Vorrichtung zur Verfügung gestellten Daten mittels der Einparkhilfseinrichtung vollautomatisch in die Parklücke 11 eingeparkt werden kann.

Dadurch, dass an jeder der beiden Längsseiten des Fahrzeugs 10 zur Durchführung des erfindungsgemäßen Verfahrens nur eine einzige Ultraschallsensoreinrichtung 13, 14 benötigt wird, kann die Integration der erfindungsgemäßen Vorrichtung in das Fahrzeug 10 vereinfacht werden. Die Verkabelung der Ultraschallsensoreinrichtungen 13, 14 kann ebenfalls relativ einfach ausgestaltet sein, so dass dadurch die Herstellungs- und Montagekosten verringert werden können.

In Fig. 3 ist der Aufbau einer Vorrichtung zur Ermittlung der Geometrie und Position einer Parklücke schematisch stark vereinfacht dargestellt. Die Vorrichtung weist eine Hauptrecheneinheit 20 auf, die bidirektional mit den Ultraschallsensoreinrichtungen 13, 14 verbunden ist, so dass Kommunikationsdaten sowie Messergebnisse zwischen den Ultraschallsensoreinrichtungen 13, 14 und der Hauptrecheneinheit 20 ausgetauscht werden können. Ferner ist die Hauptrecheneinheit 20 bidirektional mit dem Fahrzeug 10 verbunden, damit Daten zwischen der Hauptrecheneinheit 20 und dem Fahrzeug 10 ausgetauscht werden können.

Aus Vereinfachungsgründen ist in Fig. 3 nur die Anbindung einer der beiden Ultraschallsensoreinrichtungen 13, 14 an die Hauptrecheneinheit 20 gezeigt. Die andere der beiden Ultraschallsensoreinrichtung 13, 14 besitzt denselben Aufbau und ist ebenfalls bidirektional an die Hauptrecheneinheit 20 angeschlossen.

Zur Erzeugung von Ultraschallimpulsen weisen die beiden Ultraschallsensoreinrichtungen 13, 14 eine Membran 22 auf. Mittels eines piezo-elektrischen Elements wird in einem Sendebetriebsmodus der Ultraschallsensoreinrichtungen 13, 14 über die Membran 22 ein Ultraschallimpuls generiert. Die Membran 22 ist derart ausgebildet, dass sie Ultraschallimpulse mit einem astigmatischen Abstrahlbereich 16 erzeugen kann, so dass, wie in Fig. 1 und Fig. 2 angedeutet, in einem Abstand d von der Ultraschallsensoreinrichtung 13, 14 ein im Wesentlichen rechteckig ausgebildeter Detektionsbereich mit einer Länge L1 und einer Höhe H erzeugt werden kann.

Die Ultraschallsensoreinrichtungen 13, 14 weisen in diesem Ausführungsbeispiel jeweils eine eigene Recheneinheit 21 auf, die den Betrieb der Ultraschallsensoreinrichtung 13, 14 steuert. In einem Sendebetriebsmodus startet die Recheneinheit 21 die Erzeugung eines Ultraschallimpulses durch die Membran 22. Nach dem Aussenden des Ultraschallimpulses wird die Ultraschallsensoreinrichtung 13, 14 von der Recheneinheit 21 in einen Empfangsbetriebsmodus umgeschaltet. In diesem Empfangsbetriebsmodus dient die Membran 22 als Empfänger für Ultraschallimpulse, die insbesondere von den Fahrzeugen 12 sowie weiteren Hindernissen und Objekten innerhalb der Parklücke 11 in Richtung auf die jeweilige Ultraschallsensoreinrichtung 13, 14 des Fahrzeugs 10 zurückreflektiert werden.

Befindet sich zum Beispiel, wie in Fig. 3 angedeutet, innerhalb der Parklücke 11 ein Objekt 15, so wird der von der Membran 22 während des Sendebetriebsmodus ausgesandte Ultraschallimpuls zumindest teilweise wieder in Richtung auf die entsprechende Ultraschallsensoreinrichtung 13, 14 zurückreflektiert. Der an dem Objekt 15 reflektierte Anteil des Ultraschallimpulses trifft auf die Membran 22 und erzeugt dort mechanische Schwingungen. Durch die Membran 22 wird dann das piezoelektrische Element angeregt, das ein für die Rechnereinheit 21 der Ultraschallsensoreinrichtung 13, 14 auswertbares Signal generiert. Durch die mechanische Anregung des piezo-elektrischen Elements über die Membran 22 wird somit auf Grund des piezo-elektrischen Effekts ein Spannungssignal erzeugt, welches der Recheneinheit 21 verstärkt, gefiltert und digitalisiert zur Verfügung gestellt wird.

Anschließend werden die Messsignale der Hauptrecheneinheit 20 über die bidirektionale Kommunikationsschnittstelle zur Verfügung gestellt. Die Hauptrecheneinheit 20 wertet die Ergebnisse einer Mehrzahl von Einzelmessungen, die für die Vermessung der Parklücke 11 durchgeführt werden, aus und bestimmt daraus, ob die vermessene Parklücke 11 für das Einparken des Fahrzeugs 10 geeignet ist. Ferner können in Abhängigkeit von den während der Durchführung des Verfahrens erkannten Umgebungsbedingungen und Umgebungsszenarien (zum Beispiel die Erfassung des Beginns sowie des Endes der Parklücke 11) die Ultraschallsensoreinrichtungen 13, 14 von der Hauptrecheneinheit 20 in verschiedene Messmodi in Bezug auf Überlagerungsmessungen, bei denen einzelne Messungen aufaddiert werden können, sowie in Bezug auf die Messzeiten umgeschaltet werden. Auf diese Weise kann ein optimiertes Ergebnis bei der Vermessung der Parklücke 11 erhalten werden. Dies wird insbesondere durch die im vorliegenden Ausführungsbeispiel eingesetzten, so genannten "intelligenten" Ultraschallsensoreinrichtungen 13, 14 erreicht, die jeweils eine eigene integrierte Recheneinheit 21 aufweisen. Dadurch ist es zum Beispiel in relativ einfacher Weise möglich, eine an das Messsignal optimal angepasste signaladaptive Trigger-Schwelle zu ermitteln, so dass Störsignale des empfangenen Ultraschall-Echos, wie zum Beispiel ein Rauschen, zuverlässig von Nutzsignalen getrennt werden können. In gleicher Weise kann das empfangene Signal auch für eine Eigendiagnose der Ultraschallsensoreinrichtungen 13, 14 herangezogen werden. Dadurch kann beispielsweise festgestellt werden, ob die Ultraschallsensoreinrichtungen 13, 14 verschmutzt oder defekt sind. Ultraschall sensoreinrichtungen 13, 14 mit einer integrierten Recheneinheit 21 haben ferner den Vorteil, dass sie aktiv von außen konfiguriert werden können. Ferner sind derartige Ultraschallsensoreinrichtungen 13, 14 auch mehrzielfähig.

Wie bereits oben erwähnt, werden die von den Ultraschallsensoreinrichtungen 13, 14 gemessenen und von den Recheneinheiten 21 weiterverarbeiteten Daten digital an das Hauptsteuergerät 20 geleitet, welches die Einzelmessungen und Diagnosedaten zu einer Gesamtsicht der Umgebung des Fahrzeugs 10 zusammenführt und damit interpretierbar macht. Eine gute Lokalisierung der detektierten Objekte relativ zur Position des Fahrzeugs 10 ist für eine möglichst genaue Vermessung der Parklücke 11 wichtig. Ferner werden Fahrzeugdaten, wie zum Beispiel der Lenkwinkel, die Geschwindigkeit beziehungsweise die Längsdynamik des Fahrzeugs 10 sowie die Außentemperatur erfasst und der Hauptrecheneinheit 20 zur Weiterverarbeitung zur Verfügung gestellt. Die Hauptrecheneinheit 20 kann anhand dieser Fahrzeugdaten und der von der Ultraschallsensoreinrichtung 13, 14 gemessenen Daten entscheiden, ob die Parklücke 11 für das Fahrzeug 10 geeignet ist. Dazu werden für die Parklücke 11 Länge, Tiefe, Beschaffenheit, relative Position zum Fahrzeug 10 sowie Ausrichtung zum Fahrzeug 10 erfasst. Diese Daten können zum Beispiel als Basis für ein autonomes oder semi-autonomes Einparken mittels einer Einparkhilfseinrichtung dienen und können dem Fahrzeug 10 zur weiteren Verarbeitung über die bidirektionale Kommunikationsschnittstelle, wie in Fig. 3 angedeutet, bereitgestellt werden.

Sollte beispielsweise eine Mehrdeutigkeit bezüglich der vorhandenen Parklücken vorhanden sein (zum Beispiel eine erste Parklücke links und eine zweite Parklücke rechts vom Fahrzeug 10), so kann die entsprechende Ultraschallsensoreinrichtung 13, 14 beispielsweise durch Betätigung eines Blinkers oder einer anderen Fahrtrichtungsanzeigeeinrichtung des Fahrzeugs 10 aktiviert werden.

## Patentansprüche

1. Verfahren zur Ermittlung der Geometrie und Position einer Parklücke (11) in Bezug auf die Position eines Fahrzeugs (10), das an der Parklücke (11) vorbeifährt, wobei anhand von Fahrzeugdaten, einschließlich der Längsdynamik, und der von einer Ultraschallsensoreinrichtung gemessenen Daten entschieden wird, ob die Parklücke für das Fahrzeug geeignet ist, wobei die an einer Längsseite des Fahrzeugs (10) angeordnete Ultraschallsensoreinrichtung (13, 14), wiederholt Ultraschallimpulse, die in einem Abstand d vom Fahrzeug (10) einen im Wesentlichen rechteckig geformten sensitiven Detektionsbereich bilden, in Richtung auf die Parklücke (11) aussendet und dass in Abhängigkeit von den zurückreflektierten Ultraschallimpulsen die Länge und die Tiefe der Parklücke (11) bestimmt werden,
**dadurch gekennzeichnet, dass** durch eine Betätigung einer Fahrtrichtungsanzeigeeinrichtung, nämlich eines Blinkers, des Fahrzeugs (10) zwischen einer ersten Ultraschallsensoreinrichtung (13), die an einer ersten Längsseite des Fahrzeugs (10) angeordnet ist, und einer zweiten Ultraschallsensoreinrichtung (14), die an einer zweiten Längsseite des Fahrzeugs angeordnet ist, umgeschaltet werden kann.

## Claims

1. Procedure for the determination of the geometry and position of a parking space (11) relative to the position of a vehicle (10) driving past the parking space (11), wherein, by means of vehicle data including the longitudinal dynamics, and the data measured by an ultrasonic sensor device, it is decided whether the parking space is suitable for the vehicle, wherein the ultrasonic sensors (13, 14) arranged on a longitudinal side of the vehicle (10) repeatedly send ultrasonic pulses, which at a distance d from the vehicle (10) form an essentially rectangularly shaped sensitive detection area, send it in the direction of the parking space (11) and that depending on the ultrasonic pulses reflected back, the length and the depth of the parking space (11) are determined, **characterized in that** switching between a first ultrasonic sensor device (13) being arranged on a first longitudinal side of the vehicle (10) and a second ultrasonic device (14) being arranged on a second longitudinal side of the vehicle can be effected by an activation of a direction indicator, namely a turn signal, of the vehicle (10).

## Revendications

1. Procédé pour déterminer la géométrie et la position d'un créneau (11) en rapport avec la position d'un véhicule automobile (10) qui passe à côté du créneau (11), la décision si le créneau est approprié pour le véhicule automobile étant prise à l'aide des données du véhicule automobile, y compris la dynamique longitudinale et les données mesurées par un dispositif à capteur ultrasonore, le dispositif à capteur ultrasonore (13, 14) disposé sur un côté longitudinal du véhicule automobile (10) émettant de façon répétée des impulsions ultrasonores en direction du créneau (11) qui forment une zone de détection sensitive essentiellement rectangulaire à une distance d du véhicule automobile (10) et que la longueur et la profondeur du créneau (11) seront déterminées en fonction des impulsions ultrasonores réfléchies,
**caractérisé en ce que**
par le manoeuvre d'un indicateur de direction, soit un feu clignotant, du véhicule automobile (10) il sera possible de commuter entre un premier dispositif à capteur ultrasonore (13) qui est disposé sur un premier côté longitudinal du véhicule automobile (10) et un deuxième dispositif à capteur ultrasonore (14) qui est disposé sur un deuxième côté longitudinal du véhicule automobile.
